# EUROPEAN PATENT SPECIFICATION

(11) **EP 3 323 498 B1**
(45) Date of publication and mention of the grant of the patent: **14.07.2021**
(21) Application number: 16832853.2
(22) Date of filing: 26.07.2016
(51) Int. Cl.: B01D 53/94, B01J 23/63, F01N 3/10

(54) **EXHAUST GAS PURIFICATION SYSTEM AND STRADDLED VEHICLE**
ABGASREINIGUNGSSYSTEM UND GRÂTSCHSITZFAHRZEUG
SYSTEME DE PURIFICATION DE GAZ D'ÉCHAPPEMENT ET VÉHICULE A ENFOURCHER

(30) Priority: 31.07.2015 JP 2015151594; 31.07.2015 JP 2015151595
(43) Date of publication of application: 23.05.2018
(73) Proprietor: Yamaha Hatsudoki Kabushiki Kaisha, Iwata-shi, Shizuoka 438-8501 (JP)
(72) Inventor: MOTEGI, Takuya, Iwata-shi Shizuoka 438-8501 (JP); AKO, Natsuki, Iwata-shi Shizuoka 438-8501 (JP); HARADA, Hisashi, Iwata-shi Shizuoka 438-8501 (JP)
(74) Representative: Stöckeler, Ferdinand
(86) International application number: PCT/JP2016/071895
(87) International publication number: WO 2017/022574

(56) References cited:
- JP-A- 2004 321 894
- JP-A- 2007 038 072
- JP-A- 2009 220 100
- JP-A- 2009 273 988
- JP-A- 2011 529 389
- JP-A- 2015 037 784
- US-A1- 2013 310 248
- US-B2- 8 950 174

## Description

### Technical Field

The present teaching relates to an exhaust gas purification system and a straddled vehicle.

### Background Art

Conventionally, a vehicle such as a straddled vehicle provided with a gasoline-fueled engine is widely used. An exhaust gas emitted from the engine contains harmful components including hydrocarbon (HC), carbon monoxide (CO), nitrogen oxide (NOx), etc. Thus, an exhaust gas purification system including a three-way catalyst that purifies and detoxifies the harmful components is conventionally used.

The exhaust gas purification systems include an exhaust gas purification system provided with a metallic support. A catalyst layer including a three-way catalyst is provided on a surface of the metallic support. The coefficient of thermal expansion of the metallic support is different from the coefficient of thermal expansion of the catalyst layer. This raises a problem that the catalyst layer is likely to be peeled off from the metallic support if the exhaust gas purification system is subjected to a temperature change, vibrations, etc.

JP 2010 089021 A discloses a method for manufacturing an exhaust gas purification catalyst. Used in the method is a slurry including a refractory alumina, a ceria-zirconia composite oxide, a binder, a viscosity modifier, and water. In the slurry, a solid content has an average particle diameter of 3 to 10 µm. The viscosity of the slurry is 300 to 2000 mPa·s. The slurry is applied directly onto a support made of a metal material, and is dried and baked. Then, a resulting baked product is immersed in a solution containing a noble metal catalyst component, and dried and baked. JP 2010 089021 A aims to improve a peel resistance and urification performance.

JP 2007 038072 A discloses an exhaust gas catalyst comprising a catalytic base material and a catalyst coated layer on the catalyst base material. An upstream part of the catalyst coated layer comprising an internal layer and an external layer, wherein the internal layer contains a cerium-zirconium compound oxide having 50-95 wt% compositional ratio of CEO₂ and the external layer contains a cerium-zirconium compound oxide having 50-95 wt% compositional ratio of ZrO₂.

US 8 950 174 B2 discloses a catalyst comprising a substrate of stainless steel and a catalyst coating of two or more layers. A first layer provided on the substrate may comprise a ceria-zirkonia composite with 30 to 85 wt% CeO₂ and a second layer provided on the first layer may comprise a ceria-zirkonia composite with 10 to 39 wt% CeO₂.

### Summary of Invention

### Technical Problem

It is desirable to achieve both a peel resistance and purification performance at a higher level.

An object of the present teaching is to provide an exhaust gas purification system that is able to achieve both a peel resistance and purification performance at a higher level. Another object of the present teaching is to provide a straddled vehicle that is able to achieve both a peel resistance and purification performance of an exhaust gas purification system at a higher level even under severe vibratory conditions.

### Solution to Problem

The present teaching can adopt the following configurations.
(1) An exhaust gas purification system of a gasoline-fueled engine, the exhaust gas purification system including:
   a stainless steel support made of stainless steel;
   a first ceria content layer (also referred to as high ceria content layer) containing ceria and at least one type of noble metal selected from the group consisting of Pt, Pd, Ir, Ru, and Os; and
   a second layer (also referred to as low ceria content layer) containing at least one type of noble metal selected from the group consisting of Rh, Ir, Ru, Pt, Pd, Au, Ag, and Os, the second layer having a ceria content lower than a ceria content in the high ceria content layer or having a ceria content of 0 wt%,
   the first ceria content layer being provided between the second layer and the stainless steel support so as to be in contact with the second layer and the stainless steel support.

The exhaust gas purification system of (1) is an exhaust gas purification system of a gasoline-fueled engine. In the exhaust gas purification system of (1), the first ceria content layer is provided between the second layer and the stainless steel support so as to be in contact with the second layer and the stainless steel support. This improves adhesiveness of the first ceria content layer and the second layer to the stainless steel support in the exhaust gas purification system of the gasoline-fueled engine. Occurrence of peel-off of the first ceria content layer and the second layer from the stainless steel support can be suppressed over a long term.

Since the first ceria content layer contains more ceria than the second layer does, an OSC (Oxygen Storage Capacity) function of the first ceria content layer is higher than an OSC function of the second layer. The OSC is an oxygen storage capacity. The first ceria content layer is less likely to be exposed to an exhaust gas than the second layer is. On the other hand, the second layer is more likely to be exposed to an exhaust gas than the first ceria content layer is.

In the configuration of (1), as described above, the second layer is likely to be exposed to the exhaust gas, but less likely to be influenced by the OSC function. The second layer contains at least one type of noble metal selected from the group consisting of Rh, Ir, Ru, Pt, Pd, Au, Ag, and Os. These noble metals have properties that promote a reduction reaction of NOx. The second layer, therefore, easily causes a reduction reaction of NOx. The reduction reaction is expressed by the following expression (A):

NOx+CO/HC→N₂+CO₂+H₂O... (A)

In the configuration of (1), as mentioned above, the first ceria content layer is less likely to be exposed to the exhaust gas, but has a high OSC function. The first ceria content layer contains at least one type of noble metal selected from the group consisting of Pt, Pd, Ir, Ru, and Os. These noble metals have properties that promote oxidation reactions of CO and HC. The first ceria content layer, therefore, can promote oxidation reactions of CO and HC. The oxidation reactions are expressed by the following expression (B):

CO/HC+O₂→CO₂+H₂O ... (B)

Thus, the configuration of (1) can cause the oxidation reactions and the reduction reaction in a balanced manner.

As a result, both a peel resistance and purification performance of the exhaust gas purification system of the gasoline-fueled engine can be achieved at a high level.

Of the first ceria content layer and the second layer, at least the first ceria content layer contains a noble metal and a composite in which alumina and a ceria-zirconia solid solution doped with a rare earth element are combined.

This configuration can suppress sintering of the noble metal and aggregation of the ceria-zirconia solid solution. Further improvement in the purification performance can be obtained. As a result, both a peel resistance and purification performance of the exhaust gas purification system of the gasoline-fueled engine can be achieved at a higher level. In this configuration, it is more preferable that both the first ceria content layer and the second layer contain a noble metal and a composite in which alumina and a ceria-zirconia solid solution doped with a rare earth element are combined. In a case where the ceria content in the second layer is 0 wt%, the ceria-zirconia solid solution contains no zirconia, but in the present teaching, such a solid solution is also called a ceria-zirconia solid solution.

The composite has an alumina portion and a ceria-zirconia portion whose average particle diameter is smaller than the average particle diameter of the alumina portion.

In this configuration, the composite (secondary particle) is formed such that the average particle diameters of the ceria-zirconia portion (primary particle) and the alumina portion (primary particle) of the composite can satisfy the relationship of (the average particle diameter of the alumina portion) > (the average particle diameter of the ceria-zirconia portion). The composite, which is formed such that the average particle diameter of the ceria-zirconia portion and the average particle diameter of the alumina portion can satisfy such a relationship, can be easily prepared so as to obtain properties and behaviors (e.g., the average particle diameter) suitable for adhesion to the stainless steel support, or is likely to have properties and behaviors suitable for adhesion to the stainless steel support. This makes it possible to improve adhesiveness between a catalyst layer and the stainless steel support in the exhaust gas purification system of the gasoline-fueled engine, and also to improve a heat resistance. Thus, occurrence of peel-off of the catalyst layer from the stainless steel support can be suppressed over a long term. As a result, both a peel resistance and purification performance of the exhaust gas purification system of the gasoline-fueled engine can be achieved at a high level.

The composite has an average secondary particle diameter of 6 µm or more and less than 10 µm. This configuration can provide further improvement in adhesiveness of the first ceria content layer to the stainless steel support, and can also provide further improvement in adhesiveness between the first ceria content layer and the second layer.

(2) In the exhaust gas purification system of (1), it is preferable that
the noble metal in the first ceria content layer includes at least one type of metal of Pt and Pd.

Among Pt, Pd, Ir, Ru, and Os, Pt and Pd have better properties in respect of promotion of oxidation reactions of CO and HC. Accordingly, the configuration of (2) can achieve both a peel resistance and purification performance of the exhaust gas purification system of the gasoline-fueled engine at a higher level.

(3) In the exhaust gas purification system of (1) or (2), it is preferable that
the noble metal in the second layer includes at least one type of metal of Rh, Ir, and Ru.

Among Rh, Ir, Ru, Pt, Pd, Au, Ag, and Os, Rh, Ir, and Ru have better properties in respect of promotion of a reduction reaction of NOx. Accordingly, the configuration of (3) can achieve both a peel resistance and purification performance of the exhaust gas purification system of the gasoline-fueled engine at a higher level.

(4) In the exhaust gas purification system of any one of (1) to (3), it is preferable that
the percentage of ceria content in the first ceria content layer is 8 wt% or more and 40 wt% or less, and is higher than the percentage of ceria content in the second layer.

In the configuration of (4), the relationship between the OSC functions of the first ceria content layer and the second layer can be adjusted so as to further enhance purification performance of the exhaust gas purification system.

(5) In the exhaust gas purification system of any one of (1) to (4), it is preferable that
the percentage of ceria content in the second layer is less than 10 wt%, and is lower than the percentage of ceria content in the first ceria content layer.

In the configuration of (5), the relationship between the OSC functions of the first ceria content layer and the second layer can be adjusted so as to further enhance purification performance of the exhaust gas purification system. Here, the ceria content in the second layer may be 0 wt%.

(6) In the exhaust gas purification system of any one of (1) to (5), it is preferable that
the first ceria content layer having a thickness of 3 µm or more and 50 µm or less is provided between the second layer and the stainless steel support so as to be in contact with the second layer and the stainless steel support.

The configuration of (6) provides further improvement in the adhesiveness of the first ceria content layer and the second layer to the stainless steel support in the exhaust gas purification system of the gasoline-fueled engine. As a result, both a peel resistance and purification performance of the exhaust gas purification system of the gasoline-fueled engine can be achieved at a higher level.

(7) In the exhaust gas purification system of any one of (1) to (6), it is preferable that
the second layer having a thickness of 3 µm or more and 50 µm or less is provided on the first ceria content layer so as to be in contact with the first ceria content layer, the first ceria content layer being provided on the stainless steel support so as to be in contact with the stainless steel support.

The configuration of (7) provides further improvement in adhesiveness between the second layer and the first ceria content layer on the stainless steel support. As a result, both a peel resistance and purification performance of the exhaust gas purification system of the gasoline-fueled engine can be achieved at a higher level.

(8) The exhaust gas purification system of any one of (1) to (7), in which
a surface of the first ceria content layer being in contact with the second layer is an uneven surface having unevenness, and the second layer is formed such that a component of the second layer is within a recess of the uneven surface of the first ceria content layer.

In the configuration of (9), the second layer is formed such that a component of the second layer is within the recess of the uneven surface of the first ceria content layer. This can increase adhesiveness of the second layer to the first ceria content layer due to anchor effects. This also can achieve tighter coupling of the second layer to the stainless steel support with interposition of the first ceria content layer. As a result, the adhesiveness of the second layer and the first ceria content layer to the stainless steel support is further improved. Accordingly, both a peel resistance and purification performance of the exhaust gas purification system of the gasoline-fueled engine can be achieved at a higher level.

(9) A straddled vehicle including the exhaust gas purification system of any one of (1) to (8).

The straddled vehicle of (10) can achieve both a peel resistance and purification performance of the exhaust gas purification system at a higher level even under severe vibratory conditions.

### Advantageous Effects of Invention

The present teaching can achieve both a peel resistance and purification performance at a higher level.

### Brief Description of Drawings

[FIG. 1] (a) is a front elevational view schematically showing an exhaust gas purification system according to an embodiment of the present teaching; and (b) is a cross-sectional view schematically showing a stainless steel support, a high ceria content layer, and a low ceria content layer of the exhaust gas purification system shown in (a).
[FIG. 2] (a) is an electron micrograph showing a cross-section of a stainless steel support, a high ceria content layer, and a low ceria content layer in one example; and (b) schematically shows a composite serving as catalyst particles.
[FIG. 3] A side view schematically showing a motorcycle according to an embodiment of the present teaching.
[FIG. 4] (a) to (c) are diagrams for explaining measurement of film thicknesses of the high ceria content layer and the low ceria content layer.

### Description of Embodiments

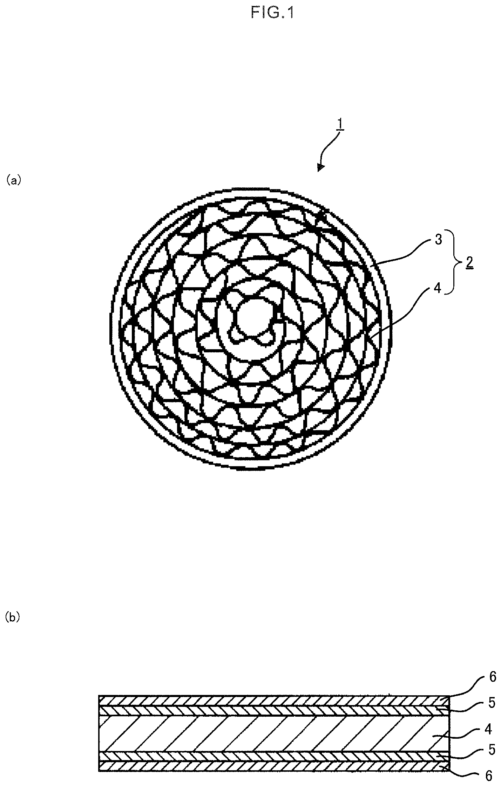

FIG. 1(a) is a front elevational view schematically showing an exhaust gas purification system 1 according to an embodiment of the present teaching. The exhaust gas purification system 1 of this embodiment includes a stainless steel support 2. The stainless steel support 2 includes a stainless steel cylindrical body 3 and a stainless steel plate 4. The type of stainless steel is not particularly limited. For example, 20Cr-5A1 based stainless steel is suitably adopted as the stainless steel.

The stainless steel cylindrical body 3 has a cylindrical shape pierced in an exhaust gas flow direction. The shape of the stainless steel cylindrical body 3 is not particularly limited. It suffices that the stainless steel cylindrical body 3 is configured so as to ensure a path in the exhaust gas flow direction. The stainless steel plate 4 is bent into a wave-like shape. The stainless steel plate 4, which is wound about an axis parallel to the exhaust gas flow direction, is arranged in the stainless steel cylindrical body 3. The stainless steel plate 4 is fixed in the stainless steel cylindrical body 3. Thus, the stainless steel support 2 has a honeycomb structure. In the drawings, a structure for fixing the stainless steel plate 4 is not shown. As the fixing structure, a conventionally known fixing structure is adoptable. A structure of the stainless steel support 2 is not limited to the honeycomb structure. Instead of the stainless steel plate 4, for example, a stainless steel wire may be loaded in the stainless steel cylindrical body 3. A high ceria content layer 5 and a low ceria content layer 6 are formed on the stainless steel support 2 (stainless steel plate 4), as will be described later. Ceria is an oxide (CeO₂) of Ce(IV).

FIG. 1(b) is a cross-sectional view schematically showing a stainless steel support, a high ceria content layer, and a low ceria content layer of the exhaust gas purification system shown in FIG. 1(a).

The high ceria content layer 5 is formed on the stainless steel plate 4 which constitutes the stainless steel support 2. The thickness of the high ceria content layer 5 is, though not particularly limited, preferably 3 µm or more and 50 µm or less from the viewpoint of achievement of both a peel resistance and purification performance. The high ceria content layer 5 is in contact with the stainless steel plate 4. The low ceria content layer 6 is formed on the high ceria content layer 5. The thickness of the low ceria content layer 6 is, though not particularly limited, preferably 3 µm or more and 50 µm or less from the viewpoint of achievement of both a peel resistance and purification performance. The low ceria content layer 6 is in contact with the high ceria content layer 5. That is, the high ceria content layer 5 is provided between the low ceria content layer 6 and the stainless steel plate 4 so as to be in contact with the low ceria content layer 6 and the stainless steel plate 4. No other layer is provided on the low ceria content layer 6, and the low ceria content layer 6 is exposed. That is, the low ceria content layer 6 is provided so as to be directly contactable with an exhaust gas. The high ceria content layer 5, on the other hand, is provided so as to be contactable with the exhaust gas having passed through the low ceria content layer 6.

The high ceria content layer 5 includes ceria and a noble metal. As for the ceria, the high ceria content layer 5 includes a composite containing ceria. In the composite, alumina (Al₂O₃) and a ceria-zirconia (CeO₂·ZrO₂) solid solution doped with a rare earth element are combined. In the composite, the average particle diameter of a ceria-zirconia portion is smaller than the average particle diameter of an alumina portion. A ceria content (wt%) in the high ceria content layer 5 is higher than a ceria content (wt%) in the low ceria content layer 6. The ceria content in the high ceria content layer 5 is preferably 8 wt% or more and 40 wt% or less. This is because better purification performance can be achieved. As for the noble metal, the high ceria content layer 5 includes Pt.

As the noble metal included in the high ceria content layer 5, at least one type of noble metal selected from the group consisting of Pt, Pd, Ir, Ru, and Os can be mentioned. These noble metals have properties that promote oxidation reactions of CO and HC. It is preferable that the noble metal included in the high ceria content layer 5 includes at least one type of metal of Pt or Pd. This is because these noble metals have better performance in promoting oxidation reactions. The high ceria content layer 5 may contain Rh in addition to at least one type of metal, of Pt or Pd. A noble metal content in the high ceria content layer 5 is not particularly limited, and can be set appropriately. The average particle diameter of the noble metal is smaller than the average particle diameter of the ceria-zirconia portion, for example. In the high ceria content layer 5, the rare earth element doped in the ceria-zirconia solid solution is not particularly limited. Preferably, the rare earth element doped in the ceria-zirconia solid solution includes at least one type of element selected from La, Nd, Pr, and Y.

The low ceria content layer 6 includes ceria and a noble metal. As for the ceria, the low ceria content layer 6 includes a composite containing ceria. In the composite, alumina and a ceria-zirconia solid solution doped with a rare earth element are combined. In the composite, the average particle diameter of a ceria-zirconia portion is smaller than the average particle diameter of an alumina portion. A ceria content (wt%) in the low ceria content layer 6 is lower than a ceria content (wt%) in the high ceria content layer 5. The ceria content in the low ceria content layer 6 is preferably 0 wt% or more and less than 10 wt%. This is because better purification performance can be achieved. As for the noble metal, the low ceria content layer 6 includes Rh. The ceria content in the low ceria content layer 6 is to such a degree that, for example, a reduction reaction of NOx by the noble metal (e.g., Rh) is not hindered.

As the noble metal included in the low ceria content layer 6, at least one type of noble metal selected from the group consisting of Rh, Ir, Ru, Pt, Pd, Au, Ag, and Os can be mentioned. These noble metals have properties that promote a reduction reaction of NOx. From the viewpoint of performance in promoting a reduction reaction, it is preferable that the noble metal included in the low ceria content layer 6 includes at least one type of noble metal selected from the group consisting of Rh, Ir, and Ru. It is more preferable that the noble metal included in the low ceria content layer 6 is Rh. A noble metal content in the low ceria content layer 6 is not particularly limited, and can be set appropriately. The average particle diameter of the noble metal is smaller than the average particle diameter of the ceria-zirconia portion, for example. An element adoptable as the rare earth element doped in the ceria-zirconia solid solution of the low ceria content layer 6 can be the same as that of the rare earth element doped in the ceria-zirconia solid solution of the high ceria content layer 5.

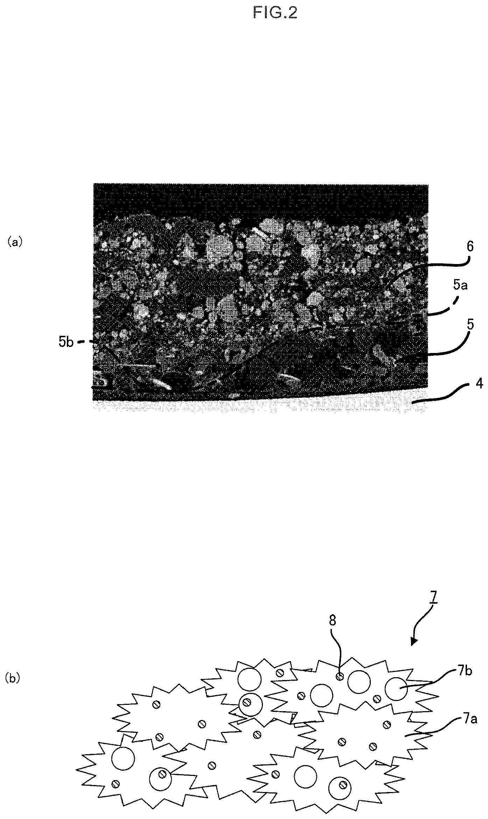

In the schematic illustration in FIG. 1, a boundary surface between the high ceria content layer 5 and the low ceria content layer 6 is flat. One exemplary embodiment of the boundary surface between the high ceria content layer 5 and the low ceria content layer 6 may be the one shown in FIG. 2(a), for example.

FIG. 2(a) is an electron micrograph showing a cross-section of a stainless steel support, a high ceria content layer, and a low ceria content layer in one example. A surface of the high ceria content layer 5 in contact with the low ceria content layer 6 is an uneven surface 5a having unevenness. The uneven surface 5a has recesses 5b recessed toward the stainless steel plate 4 side. The low ceria content layer 6 is formed such that components of the low ceria content layer 6 are within the recesses 5b of the uneven surface 5a of the high ceria content layer 5. At least some of the recesses 5b of the uneven surface 5a have a depth of, for example, not less than 1/2 of the thickness of the high ceria content layer 5.

FIG. 2(b) schematically shows a composite 7. In the composite 7, alumina and a ceria-zirconia solid solution doped with a rare earth element are combined. The composite 7 has an alumina portion 7a and a ceria-zirconia portion 7b. The noble metal particles 8 are supported on the composite 7. The composite 7 having the noble metal particles 8 supported thereon constitutes each part of the high ceria content layer 5 and the low ceria content layer 6.

In this embodiment, the average particle diameter of the ceria-zirconia portion 7b (primary particle) is smaller than the average particle diameter of the alumina portion 7a (primary particle). It is preferable that the average particle diameter (D50) of the composite 7 (secondary particle) is 6 µm or more and less than 10 µm. The average particle diameter of the ceria-zirconia portion (primary particle) is measured in the following manner. Based on the surface area of a primary particle in an image or photograph of the high ceria content layer or the low ceria content layer, the diameter (equivalent diameter) of the primary particle is calculated assuming that the primary particle in the image or photograph is a perfect circle. Based on the number (frequency) and the diameters of the obtained primary particles, the average particle diameter of the primary particle diameters is calculated. As for the alumina portion (primary particle) whose shape is normally like an elongated rectangle, the longer diameter (length in the longitudinal direction) and the shorter diameter (length in the short-side direction) of an alumina portion included in the image or photograph are measured. The average particle diameter (D50) of the secondary particles is measured using a particle counter.

The exhaust gas purification system 1 according to this embodiment is manufactured, for example, as follows. The stainless steel support 2 is prepared. A slurry for forming the high ceria content layer 5 and a slurry for forming the low ceria content layer 6 are respectively prepared. The preparation of the slurries is implemented by, for example, mixing alumina-ceria-zirconia composite powder, alumina, and a binder into a solvent (e.g., water) and then agitating. Here, the alumina-ceria-zirconia composite powder is powder obtained by combining alumina with a ceria-zirconia solid solution. The alumina-ceria-zirconia composite powder before forming the slurry has an average particle diameter (secondary particle diameter (D50)) of, for example, 1 µm or more and 100 µm or less. The alumina-ceria-zirconia composite powder has noble metal particles adsorbed thereon. The ceria-zirconia solid solution is doped with a rare earth element. Then, a milling process is performed to adjust the particle size of each of the obtained slurries. It is preferable that the milling process is performed such that the average particle diameter of the composite obtained after milling can be adjusted to 6 µm or more and less than 10 µm. In this manner, the slurry for forming the high ceria content layer 5 and the slurry for forming the low ceria content layer 6 are obtained. Then, the slurry for forming the high ceria content layer 5 is applied to the stainless steel support 2. The stainless steel support 2 having the slurry applied thereon is dried and baked. To the resulting baked product, the slurry for forming the low ceria content layer 6 is applied. The baked product having the slurry applied thereon is dried and baked. As a result, the exhaust gas purification system 1 including the stainless steel support 2 with the high ceria content layer 5 and the low ceria content layer 6 formed thereon can be manufactured. Separately from the correlation between the slurry viscosity and the adhesiveness of the respective layers 5, 6 to the stainless steel support 2, there is a high correlation between the average particle diameter of a solid content (e.g., the composite) and the adhesiveness of the respective layers 5, 6 to the stainless steel support 2. This embodiment can achieve both a peel resistance and purification performance at a higher level depending on a combination of such a high correlation and a composition of the respective layers 5, 6 and the stainless steel support 2. The slurry viscosity is not particularly limited, as long as the viscosity is to such a degree that the respective layers 5, 6 can be formed on the stainless steel support 2. The slurry viscosity can be selected as appropriate so as to allow the respective layers 5, 6 to be formed on the stainless steel support 2.

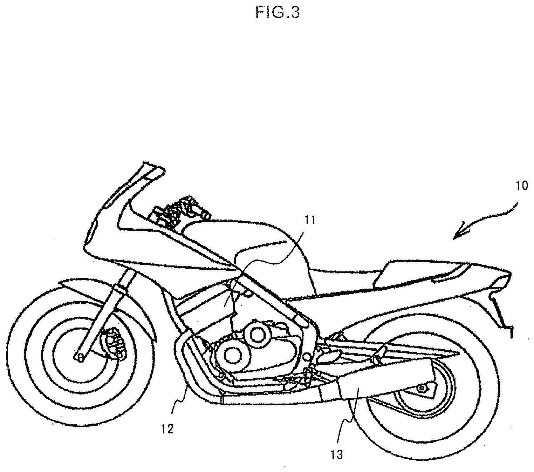

FIG. 3 is a side view schematically showing a motorcycle 10 according to an embodiment of the present teaching.

The motorcycle 10 corresponds to one example of the straddled vehicle of the present teaching. The motorcycle 10 includes a gasoline-fueled engine 11, an exhaust pipe 12, and a muffler 13. The exhaust pipe 12 is connected to an exhaust port of the engine 11. The muffler 13 is connected to the exhaust pipe 12. In the exhaust pipe 12, the exhaust gas purification system 1 (not shown) is provided. In the exhaust pipe 12, a secondary air introducing device (not shown) for introducing a secondary air is also provided. The motorcycle 10 is configured to produce a mixed gas through injection. The present teaching is not limited to this example. The straddled vehicle of the present teaching may be of carburetor type.

The straddled vehicle of the present teaching is not limited to the motorcycle 10. The straddled vehicle of the present teaching is not particularly limited, and examples thereof include motor tricycles, snowmobiles, ATVs (All-Terrain Vehicles), and the like. The exhaust gas purification system of the present teaching has good purification performance and a good peel resistance. Accordingly, the exhaust gas purification system of the present teaching is suitably used for a straddled vehicle, and can effectively reduce occurrence of peel-off of the catalyst due to vibrations, etc.

A prototype of the exhaust gas purification system according to this embodiment was manufactured and effects thereof were examined, a result of which will be described below.

### [Example 1]

### <Production of catalyst powder for high ceria content layer 5>

0.3L of a dinitrodiamine platinum nitrate solution (Pt=30g) and 4.97kg of ACZ were added to 15L of ion-exchange water, and agitation was performed at 80°C for one hour, to obtain a mixture. Here, ACZ is a cocatalyst containing 47.5 wt% of Al₂ O₃, 23.25 wt% of CeO₂, 23.25 wt% of ZrO₂, 3.25 wt% of La₂ O₃, and 2.75 wt% of Nd₂O₃. Then, the mixture was dried at 120°C for one hour, and then baked at 500°C for 80 min, to obtain Pt/ACZ serving as catalyst powder. The loading of Pt on the Pt/ACZ was 0.6 wt%. The average particle diameter (secondary particle diameter (D50)) of the composite powder was 16.8 µm.

### <Preparation of slurry for high ceria content layer 5>

To 4800g of the obtained Pt/ACZ, 1805g of γ-Al₂ O₃ (Al₂ O₃ :La₂ O₃ (weight ratio)), 602g of a CeO₂ sol (nitrate solution containing 30 wt% of CeO₂) (CeO₂=180.6g), 192mL of nitric acid (1.38), and 7000g of ion-exchange water were added, to prepare a mixture. The mixture was subjected to a milling process. To be specific, the mixture was milled for 15 min with a ball mill. As a result, a slurry for the high ceria content layer 5 was obtained. After the milling, the composite had an average particle diameter of 8.6 µm. The slurry for the high ceria content layer 5 had a viscosity of 362 cP.

### <Production of catalyst powder for low ceria content layer 6>

0.45L of a rhodium nitrate solution (Rh=45g) and 4.955kg of AZN were added to 15L of ion-exchange water, and agitation was performed at 80°C for one hour, to obtain a mixture. Here, AZN is a cocatalyst containing 47.5 wt% of Al₂ O₃, 42.5 wt% of ZrO₂, 3.25 wt% of La₂ O₃, and 6.75 wt% of Nd₂ O₃. Then, the mixture was dried at 120°C for one hour, and then baked at 500°C for 80 min, to obtain Rh/AZN serving as catalyst powder. The loading of Rh on the Ph/AZN was 0.9 wt%. The average particle diameter (secondary particle diameter (D50)) of the composite powder was 14.8 µm.

### <Preparation of slurry for low ceria content layer 6>

To 4800g of the obtained Rh/AZN, 1805g of γ-Al₂ O₃ (Al₂ O₃ :La₂ O₃ (weight ratio)), 602g of a CeO₂ sol (nitrate solution containing 30 wt% of CeO₂) (CeO₂=180.6g), 192mL of nitric acid (1.38), and 7000g of ion-exchange water were added, to prepare a mixture. The mixture was subjected to a milling process. To be specific, the mixture was milled for 15 min with a ball mill. As a result, a slurry for the low ceria content layer 6 was obtained. After the milling, the composite had an average particle diameter of 8.6 µm. The slurry for the low ceria content layer 6 had a viscosity of 368 cP.

### <Manufacturing of exhaust gas purification system>

A stainless steel support 2 (the diameter 30 mm, the length 30 mm, the number of cells 300 cpsi) was prepared. The slurry for the high ceria content layer 5 was applied to the stainless steel support 2, and a resultant was dried at 120°C and baked at 450°C. Then, the slurry for the low ceria content layer 6 was applied onto the high ceria content layer 5, and a resultant was dried at 120°C and baked at 450°C. In this manner, an exhaust gas purification system according to Example 1 was obtained. The thickness of the high ceria content layer 5 was 10.5 µm. The thickness of the low ceria content layer 6 was 11.5 µm. Measurement of the thicknesses of the high ceria content layer 5 and the low ceria content layer 6 will be described later.

### [Example 2]

Example 2 is different from Example 1 in the following conditions. The amount of the noble metal was changed, as shown in Table 2. In addition, the amount of water and the amount of nitric acid were adjusted such that the viscosity of the slurry for the low ceria content layer 6 can be higher than that of Example 1. As a result, the viscosity of the slurry for the low ceria content layer 6 was 500 cP. The viscosity of the slurry for the high ceria content layer 5 was 390 cP. Moreover, in the preparation of the slurry for the high ceria content layer 5 and the preparation of the slurry for the low ceria content layer 6, a time period for milling the mixture with a ball mill was changed to 17 min. Except for these conditions, an exhaust gas purification system 1 was manufactured under the same conditions as of Example 1.

### [Example 3]

Example 3 is different from Example 1 in the following conditions. The amount of the noble metal was changed, as shown in Table 2. In addition, the amount of water and the amount of nitric acid were adjusted such that the viscosity of the slurry for the low ceria content layer 6 can be higher than that of Example 1. As a result, the viscosity of the slurry for the low ceria content layer 6 was 600 cP. The viscosity of the slurry for the high ceria content layer 5 was 345 cP. Moreover, in the preparation of the slurry for the high ceria content layer 5 and the preparation of the slurry for the low ceria content layer 6, a time period for milling the mixture with a ball mill was changed to 20 min. Except for these conditions, an exhaust gas purification system 1 was manufactured under the same conditions as of Example 1.

### [Example 4]

Example 4 is different from Example 1 in the following conditions. The amount of the noble metal was changed, as shown in Table 2. In addition, the amount of water and the amount of nitric acid were adjusted such that the viscosity of the slurry for the high ceria content layer 5 and the viscosity of the slurry for the low ceria content layer 6 can be lower than that of Example 1. As a result, the viscosity of the slurry for the high ceria content layer 5 was 220 cP, and the viscosity of the slurry for the low ceria content layer was 150 cP. Moreover, in the preparation of the slurry for the high ceria content layer 5 and the preparation of the slurry for the low ceria content layer 6, a time period for milling the mixture with a ball mill was changed to 30 min. Except for these conditions, an exhaust gas purification system 1 was manufactured under the same conditions as of Example 1.

### [Example 5]

Example 5 is different from Example 1 in the conditions regarding <Production of catalyst powder for high ceria content layer 5>. In Example 5, 0.3L of a dinitrodiamine platinum nitrate solution (Pt=30g) and 4.97kg of ACZ were added to 15L of ion-exchange water, and agitation was performed at 80°C for one hour, to obtain a mixture. Then, the mixture was dried at 120°C for one hour, and then baked at 500°C for 80 min, to obtain Pt/ACZ serving as a catalyst powder. The other conditions under which an exhaust gas purification system 1 was manufactured were the same as of Example 1. The viscosity of the slurry for the high ceria content layer 5 was 352 cP, and the viscosity of the slurry for the low ceria content layer 6 was 334 cP.

### [Example 6]

Example 6 is different from Example 1 in the conditions regarding <Production of catalyst powder for high ceria content layer 5>. In Example 6, 0.3L of a dinitrodiamine platinum nitrate solution (Pt=30g) and 4.97kg of ACZ were added to 15L of ion-exchange water, and agitation was performed at 80°C for one hour, to obtain a mixture. Then, the mixture was dried at 120°C for one hour, and then baked at 500°C for 80 min, to obtain Pt/ACZ serving as a catalyst powder. The other conditions under which an exhaust gas purification system 1 was manufactured were the same as of Example 1. The viscosity of the slurry for the high ceria content layer 5 was 367 cP, and the viscosity of the slurry for the low ceria content layer 6 was 334 cP.

### [Example 7]

Example 7 is different from Example 1 in the conditions regarding <Production of catalyst powder for low ceria content layer 6>. In Example 7, 0.45L of a rhodium nitrate solution (Rh=45g) and 4.955kg of ACZ were added to 15L of ion-exchange water, and agitation was performed at 80°C for one hour, to obtain a mixture. Then, the mixture was dried at 120°C for one hour, and then baked at 500°C for 80 min, to obtain Rh/ACZ serving as a catalyst powder. The other conditions under which an exhaust gas purification system 1 was manufactured were the same as of Example 1. The viscosity of the slurry for the high ceria content layer 5 was 362 cP, and the viscosity of the slurry for the low ceria content layer 6 was 375 cP.

### [Example 8]

Example 8 is different from Example 1 in the following conditions. The amount of the noble metal was changed, as shown in Table 2. In addition, the amount of water and the amount of nitric acid were adjusted such that the viscosity of the slurry for the high ceria content layer 5 and the viscosity of the slurry for the low ceria content layer 6 can be higher than that of Example 1. As a result, the viscosity of the slurry for the high ceria content layer 5 was 720 cP, and the viscosity of the slurry for the low ceria content layer 6 was 525 cP. Moreover, in the preparation of the slurry for the high ceria content layer 5 and the preparation of the slurry for the low ceria content layer 6, a time period for milling the mixture with a ball mill was changed to 10 min. Except for these conditions, an exhaust gas purification system 1 was manufactured under the same conditions as of Example 1.

### [Example 9]

Example 9 is different from Example 1 in the following conditions. The amount of the noble metal was changed, as shown in Table 2. In addition, the amount of water and the amount of nitric acid were adjusted such that the viscosity of the slurry for the high ceria content layer 5 and the viscosity of the slurry for the low ceria content layer 6 can be lower than that of Example 1. As a result, the viscosity of the slurry for the high ceria content layer 5 was 83 cP, and the viscosity of the slurry for the low ceria content layer 6 was 97 cP. Moreover, in the preparation of the slurry for the high ceria content layer 5 and the preparation of the slurry for the low ceria content layer 6, a time period for milling the mixture with a ball mill was changed to 40 min. Except for these conditions, an exhaust gas purification system 1 was manufactured under the same conditions as of Example 1.

### [Comparative Example 1]

In Comparative Example 1, production of catalyst powder for the low ceria content layer 6 and preparation of a slurry for the low ceria content layer 6 were implemented by the same method as of Example 1. The slurry viscosity was 366 cP. Then, the same stainless steel support 2 as that of Example 1 was prepared. The slurry for the low ceria content layer 6 was applied to the stainless steel support 2, and a resultant was dried at 120°C and baked at 450°C. In this manner, an exhaust gas purification system according to Comparative Example 1 was obtained.

### [Comparative Example 2]

In Comparative Example 2, production of catalyst powder for the high ceria content layer 5 and preparation of a slurry for the high ceria content layer 5 were implemented by the same method as of Example 1. The slurry viscosity was 378 cP. Then, the same stainless steel support 2 as that of Example 1 was prepared. The slurry for the high ceria content layer 5 was applied to the stainless steel support 2, and a resultant was dried at 120°C and baked at 450°C. In this manner, an exhaust gas purification system according to Comparative Example 2 was obtained.

### [Comparative Example 3]

In Comparative Example 3, production of catalyst powder for the high ceria content layer 5 and catalyst powder for the low ceria content layer 6 and preparation of a slurry for the high ceria content layer 5 and a slurry for the low ceria content layer 6 were implemented by the same method as of Example 1. The viscosity of the slurry for the high ceria content layer 5 was 366 cP, and the viscosity of the slurry for the low ceria content layer 6 was 378 cP. Then, the same stainless steel support 2 as that of Example 1 was prepared. The slurry for the low ceria content layer 6 was applied to the stainless steel support 2, and a resultant was dried at 120°C and baked at 450°C. Then, the slurry for the high ceria content layer 5 was applied onto the low ceria content layer 6, and a resultant was dried at 120°C and baked at 450°C. In this manner, an exhaust gas purification system according to Comparative Example 3 was obtained.

### <Measurement of layer thickness>

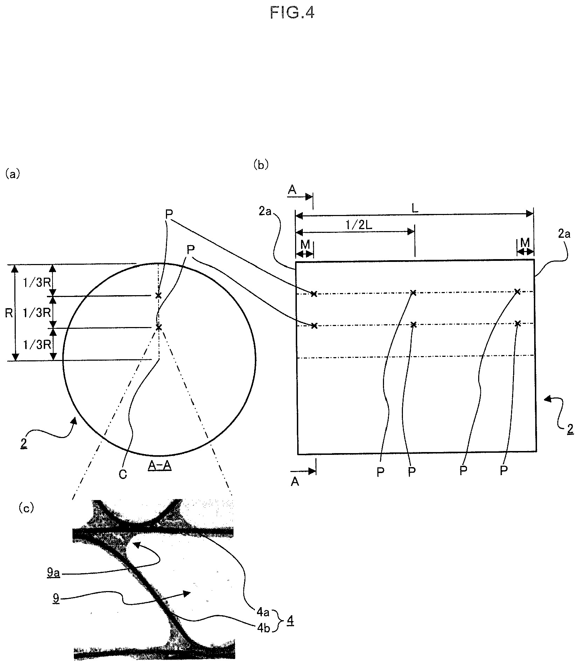

For each of the exhaust gas purification systems according to Examples 1 to 9 and Comparative Examples 1 to 3, the thicknesses of the high ceria content layer and the low ceria content layer were measured. FIGS. 4(a) to (c) are diagrams for explaining measurement of the thicknesses of the high ceria content layer and the low ceria content layer. FIG. 4(a) shows a cross-section as taken along the line A-A of FIG. 4(b). FIG. 4(b) is a transverse cross-sectional view showing the outer shape of the exhaust gas purification system 1. FIG. 4(c) shows a cross-section of a part of FIG. 4(b) on an enlarged scale, schematically illustrating cells 9 in the exhaust gas purification system 1. In FIG. 4(a) and FIG. 4(b), P represents a layer thickness measurement position. R represents the radius of the stainless steel support 2. L represents the length of the stainless steel support 2 with respect to the exhaust gas flow direction.

There are six layer thickness measurement positions P as shown in FIG. 4(b). For one cell 9 arranged in each measurement position P, layer thicknesses at two locations are measured. Thus, for each exhaust gas purification system, layer thicknesses at twelve locations are measured.

As shown in FIG. 4(b), the six measurement positions P are dispersedly arranged in three regions with respect to the exhaust gas flow direction of the stainless steel support 2. Specifically, as shown in FIG. 4(b), among the six measurement positions P, two measurement positions P are located in a middle portion of the stainless steel support 2 with respect to the exhaust gas flow direction of the stainless steel support 2, that is, located at a distance (1/2)L from an end surface 2a. Other two measurement positions P are located at a distance M from one end surface 2a of the stainless steel support 2. The remaining two measurement positions are located at a distance M from the other end surface 2a of the stainless steel support 2. The distance M is 5 mm. When the stainless steel support 2 is viewed in the exhaust gas flow direction, the measurement positions P are located at a distance (1/3)R from a center C and at a distance (2/3)R from the center with respect to the radial direction of the stainless steel support 2, as shown in FIG. 4(a).

Measured are the layer thickness of a catalyst provided on one surface of a circumferentially oriented portion 4a and the layer thickness of a catalyst provided on one surface of a radially oriented portion 4b of the stainless steel plate 4 that constitutes one cell 9 arranged in each of the six measurement positions P. The layer thickness is measured at a position where the catalyst is formed flatly. A catalyst adhered to a corner portion 9a of the cell 9 is relatively thick, but the layer thickness is not measured at the corner portion 9a.

As thus described above, the layer thickness is obtained by: measuring the layer thickness of the circumferentially oriented portion 4a and the layer thickness of the radially oriented portion 4b in each of the six cells located in the six measurement positions P in total, namely, two positions (FIG. 4(a)) with respect to the radial direction in each of three regions (FIG. 4(b)) with respect to the exhaust gas flow direction; and calculating the average value. Here, it may be acceptable that the layer thickness of each of the high ceria content layer 5 and the low ceria content layer 6 is measured after the high ceria content layer 5 and the low ceria content layer 6 are formed. It may also be acceptable that: the layer thickness of the high ceria content layer 5 is measured before the low ceria content layer 6 is formed; the total layer thickness of the high ceria content layer 5 and the low ceria content layer 6 is measured after the low ceria content layer 6 is formed; and the layer thickness of the high ceria content layer 5 is subtracted from the total layer thickness, to calculate the layer thickness of the low ceria content layer 6.

### <Measurement of particle diameters of ceria-zirconia portion and alumina portion>

For each of the exhaust gas purification systems 1 according to Examples 1 to 9 and Comparative Examples 1 to 3, a sample of each layer was prepared for the purpose of measuring the particle diameters of a ceria-zirconia portion and an alumina portion of a composite included in the layer. Using a transmission electron microscope (TEM), the sample of each layer was observed, and an image of each layer was obtained. From each image, twenty ceria-zirconia portions and twenty alumina portions were arbitrarily extracted. As for the ceria-zirconia portions, as described above, the equivalent diameter of each ceria-zirconia portion was calculated and determined as the particle diameter of the ceria-zirconia portion. As for the alumina portions, the longer diameter and shorter diameter of each alumina portion were measured and determined as the particle diameter of the alumina portion. As a result, in any of the exhaust gas purification systems 1 according to Examples 1 to 9 and Comparative Examples 1 to 3, the particle diameter of the ceria-zirconia portion was 4 to 5 nm. As for the particle diameter of the alumina portion, the shorter diameter was 3 to 10 nm and the longer diameter was 30 to 40 nm. Furthermore, each average particle diameter (equivalent diameter) was calculated, with the result that the average particle diameter of the ceria-zirconia portion was smaller than the average particle diameter of the alumina portion.

### <Adhesiveness test>

The mass of each of the exhaust gas purification systems 1 manufactured in Examples 1 to 9 and Comparative Examples 1 to 3 was measured. Then, each of the exhaust gas purification systems 1 was subjected to an ultrasonic treatment for 10 min using an ultrasonic cleaner having ion-exchange water therein, then dried at 200°C for one hour using an electric furnace, then the mass was measured again, and the amount of peel-off was calculated based on the difference in mass before and after the ultrasonic treatment.

### <Exhaust gas purification performance test>

For each of the exhaust gas purification systems 1 manufactured in Examples 1 to 9 and Comparative Examples 1 to 3, a new exhaust gas purification system 1 and an exhaust gas purification system 1 heated in stoichiometric atmosphere at 800 °C for one hour were prepared, for the purpose of evaluating exhaust gas purification performance. A prepared catalyst was set in a reactor machine, and the temperature was raised from ambient temperature to 600 °C in a model gas simulating stoichiometric atmosphere, and held for 5 min after the temperature reached 600°C. Then, with a flow of a simulant gas having the composition shown in Table 1 below, purification performance was evaluated in a range of 150 to 600°C. During the evaluation of purification performance, the air-fuel ratio (AFR) of the simulant gas was varied within a range of approximately ±0.4. In Table 1, INJ(CO) and INJ(O₂) indicate CO and O₂ that were alternately introduced in order to vary the air-fuel ratio of the simulant gas.

A peel resistance and purification performance are shown in Table 2. As for Examples 1 to 9, in the table, Lower Layer corresponds to the high ceria content layer 5, and Upper Layer corresponds to the low ceria content layer 6. As for Comparative Example 1, Single Layer corresponds to the low ceria content layer. As for Comparative Example 2, Single Layer corresponds to the high ceria content layer. As for Comparative Example 3, in the table, Lower Layer corresponds to the low ceria content layer, and Upper Layer corresponds to the high ceria content layer.

**[Table 1]**

| Gaseous Species | | |
|---|---|---|
| C₃H₆ | ppm | 2400 |
| C₃H₈ | ppm | 600 |
| CO | % | 0.5 |
| NO | ppm | 800 |
| NH₃ | ppm | 0 |
| O₂ | % | 0.67 |
| CO₂ | % | 10 |
| H₂O | % | 10 |
| H₂ | % | 0.2 |
| INJ(CO) | % | 0.8 |
| INJ(O₂) | % | 0.4 |

**[Table 2]**

| | | Noble Metal | Amount of Noble Metal | Ceria Content | Average Particle Diameter of Composite | Film Thickness | Total Film Thickness | Peel Resistance | Purification Performance | | |
|---|---|---|---|---|---|---|---|---|---|---|---|
| | | | | | | | | Amount of Pee off | CO | HC | Nox |
| | | - | g/L | wt% | *µ*m | *µ*m | *µ*m | % | % | % | % |
| Ex1 | Upper Layer | Rh | 0.3 | 2.7 | 8.6 | 11.5 | 22.0 | 3.9 | 93.5 | 80.9 | 80.0 |
| | Low er Layer | Pt | 0.3 | 19.1 | 8.6 | 10.5 | | | | | |
| Ex2 | Upper Layer | Rh | 0.1 | 2.7 | 8.0 | 18.5 | 31.0 | 8.3 | 93.1 | 79.9 | 79.7 |
| | Low er Layer | Pt | 0.3 | 19.1 | 8.7 | 12.5 | | | | | |
| Ex3 | Upper Layer | Rh | 0.1 | 2.7 | 7.6 | 12.7 | 23.7 | 6.7 | 93.1 | 79.5 | 79.7 |
| | Lower Layer | Pt | 0.3 | 19.1 | 7.4 | 11 | | | | | |
| Ex4 | Upper Layer | Rh | 0.1 | 2.7 | 6.3 | 8.7 | 17.0 | 7.5 | 93.1 | 79.5 | 79.6 |
| | Low er Layer | Pt | 0.3 | 19.1 | 6.2 | 8.3 | | | | | |
| Ex5 | Upper Layer | Rh | 0.3 | 2.7 | 8.6 | 13.7 | 24.3 | 5.4 | 93.5 | 81.0 | 76.4 |
| | Low er Layer | Pt | 0.3 | 9.8 | 8.2 | 10.6 | | | | | |
| Ex6 | Upper Layer | Rh | 0.3 | 2.7 | 8.6 | 11.4 | 20.2 | 6.2 | 93.8 | 81.3 | 79.6 |
| | Low er Layer | Pt | 0.3 | 31.0 | 8.4 | 8.8 | | | | | |
| Ex7 | Upper Layer | Rh | 0.3 | 9.8 | 8.8 | 14.4 | 25.7 | 7.6 | 90.2 | 77.0 | 77.1 |
| | Low er Layer | Pt | 0.3 | 19.1 | 8.6 | 11.3 | | | | | |
| Ex8 | Upper Layer | Rh | 0.1 | 2.7 | 11.6 | 18.8 | 30.7 | 11.8 | 93.2 | 80.2 | 80.1 |
| | Low er Layer | Pt | 0.3 | 19.1 | 13.3 | 11.9 | | | | | |
| Ex9 | Upper Layer | Rh | 0.1 | 2.7 | 5.9 | 5.4 | 10.0 | 10.9 | 92.2 | 77.3 | 79.2 |
| | Low er Layer | Pt | 0.3 | 19.1 | 5.5 | 4.6 | | | | | |
| Com Ex1 | Single Layer | Rh | 0.3 | 2.7 | 8.8 | 10.1 | 10.1 | 8.0 | 90.3 | 80.9 | 64.6 |
| Com Ex2 | Single Layer | Pt | 0.3 | 19.1 | 8.3 | 11.6 | 11.6 | 19.0 | 98.3 | 80.8 | 61.0 |
| Com Ex3 | Upper Layer | Pt | 0.3 | 19.1 | 8.3 | 12.2 | 23.4 | 7.7 | 85.3 | 72.6 | 77.4 |
| | Low er Layer | Rh | 0.3 | 2.7 | 8.8 | 11.2 | | | | | |

As shown in Table 2, the exhaust gas purification systems according to Examples 1 to 9 were able to achieve both a peel resistance and purification performance at a high level. In particular, the exhaust gas purification systems according to Examples 1 to 7 were able to achieve a good peel resistance with sufficient purification performance ensured. As a result, the exhaust gas purification systems according to Examples 1 to 7 were able to achieve both a peel resistance and purification performance at a further higher level.

The exhaust gas purification system according to Comparative Example 1, on the other hand, was not able to provide sufficient purification performance (especially purification performance on NOx). The exhaust gas purification system according to Comparative Example 2 was neither able to provide a sufficient peel resistance nor sufficient purification performance (especially purification performance on NOx). The exhaust gas purification system according to Comparative Example 3 was not able to provide sufficient purification performance (especially purification performance on CO and HC). Thus, none of the exhaust gas purification systems according to Comparative Examples 1 to 3 were able to achieve both a peel resistance and purification performance at a high level.

The embodiments and variations can be combined as appropriate. It should be understood that the terms and expressions used herein are for descriptions and not to be construed in a limited manner, do not eliminate any equivalents of features shown and mentioned herein, and allow various modifications falling within the claimed scope of the present invention. The present invention may be embodied in many different forms. The present disclosure is to be considered as providing embodiments of the principles of the invention. The embodiments are described herein with the understanding that such embodiments are not intended to limit the invention to preferred embodiments described herein and/or illustrated herein. The embodiments described herein are not limiting. The present invention includes any and all embodiments having equivalent elements, modifications, omissions, combinations, adaptations and/or alterations as would be appreciated by those in the art based on the present disclosure. The limitations in the claims are to be interpreted broadly based on the language employed in the claims and not limited to embodiments described in the present specification or during the prosecution of the present application.

### Reference Signs List

- 1: exhaust gas purification system
- 2: stainless steel support
- 3: stainless steel cylindrical body
- 4: stainless steel plate
- 4a: circumferentially oriented portion
- 4b: radially oriented portion
- 5: high ceria content layer
- 5a: uneven surface
- 5b: recess
- 6: low ceria content layer
- 7: composite
- 7a: alumina portion
- 7b: ceria-zirconia portion
- 8: noble metal particle
- 9: cell
- 9a: corner portion
- 10: motorcycle
- 11: engine
- 12: exhaust pipe
- 13: muffler

## Claims

1. An exhaust gas purification system (1) of a gasoline-fueled engine (11), the exhaust gas purification system (1) comprising:
a stainless steel support (2) made of stainless steel;
a first layer (5) containing ceria and at least one type of noble metal selected from the group consisting of Pt, Pd, Ir, Ru, and Os; and
a second layer (6) containing at least one type of noble metal selected from the group consisting of Rh, Ir, Ru, Pt, Pd, Au, Ag, and Os, the second layer (6) having a ceria content lower than a ceria content in the first layer (5) or having a ceria content of 0 wt%,
the first layer (5) being provided between the second layer (6) and the stainless steel support (2) so as to be in contact with the second layer (6) and the stainless steel support (2), the second layer (6) being provided on the first layer (5),
wherein of the first layer (5) and the second layer (6), at least the first layer (5) contains a noble metal and a composite in which alumina and a ceria-zirconia solid solution doped with a rare earth element are combined,
wherein the composite has an alumina portion and a ceria-zirconia portion whose average primary particle diameter is smaller than the average primary particle diameter of the alumina portion, and
wherein the composite has an average secondary particle diameter of 6 µm or more and less than 10 µm.

2. The exhaust gas purification system (1) according to claim 1, wherein
the noble metal in the first layer (5) includes at least one type of metal of Pt and Pd.

3. The exhaust gas purification system (1) according to claim 1 or 2, wherein
the noble metal in the second layer (6) includes at least one type of metal of Rh, Ir, and Ru.

4. The exhaust gas purification system (1) according to any one of claims 1 to 3, wherein
the percentage of ceria content in the first layer (5) is 8 wt% or more and 40 wt% or less, and is higher than the percentage of ceria content in the second layer (6).

5. The exhaust gas purification system (1) according to any one of claims 1 to 4, wherein
the percentage of ceria content in the second layer (6) is less than 10 wt%, and is lower than the percentage of ceria content in the first layer (5).

6. The exhaust gas purification system (1) according to any one of claims 1 to 5, wherein
the first layer (5) having a thickness of 3 µm or more and 50 µm or less is provided between the second layer (6) and the stainless steel support (2) so as to be in contact with the second layer (6) and the stainless steel support (2).

7. The exhaust gas purification system (1) according to any one of claims 1 to 6, wherein
the second layer (6) having a thickness of 3 µm or more and 50 µm or less is provided on the first layer (5) so as to be in contact with the first layer (5), the first layer (5) being provided on the stainless steel support (2) so as to be in contact with the stainless steel support (2).

8. The exhaust gas purification system (1) according to any one of claims 1 to 7, wherein
a surface of the first layer (5) being in contact with the second layer (6) is an uneven surface having unevenness, and the second layer (6) is formed such that a component of the second layer (6) is within a recess of the uneven surface of the first layer (5).

9. A straddled vehicle (10) comprising the exhaust gas purification system (1) according to any one of claims 1 to 8.

## Patentansprüche

1. Ein Abgasreinigungssystem (1) eines mit Benzin betriebenen Motors (11), wobei das Abgasreinigungssystem (1) folgende Merkmale aufweist:
einen rostfreien Stahlträger (2), der aus rostfreiem Stahl hergestellt ist;
eine erste Schicht (5), die Ceroxid und zumindest eine Art von Edelmetall beinhaltet, das aus der Gruppe ausgewählt ist, die besteht aus Pt, Pd, Ir, Ru, und Os; und
eine zweite Schicht (6), die zumindest eine Art von Edelmetall beinhaltet, das aus der Gruppe ausgewählt ist, die besteht aus Rh, Ir, Ru, Pt, Pd, Au, Ag und Os, wobei die zweite Schicht (6) einen Ceroxidgehalt aufweist, der niedriger ist als ein Ceroxidgehalt in der ersten Schicht (5), oder einen Ceroxidgehalt von 0 Gew.-% aufweist,
wobei die erste Schicht (5) zwischen der zweiten Schicht (6) und dem rostfreien Stahlträger (2) so vorgesehen ist, dass sie in Kontakt mit der zweiten Schicht (6) und dem rostfreien Stahlträger (2) steht, wobei die zweite Schicht (6) auf der ersten Schicht (5) vorgesehen ist,
wobei von der ersten Schicht (5) und der zweiten Schicht (6) zumindest die erste Schicht (5) ein Edelmetall und einen Verbundstoff beinhaltet, bei dem Aluminiumoxid und eine Ceroxid-Zirkonoxid-Feststoff-Lösung, die mit einem Seltene-Erden-Element dotiert ist, kombiniert sind,
wobei der Verbundstoff einen Aluminiumoxidabschnitt und einen Ceroxid-Zirkonoxid-Abschnitt aufweist, dessen durchschnittlicher Primärteilchendurchmesser kleiner ist als der durchschnittliche Primärteilchendurchmesser des Aluminiumoxidabschnitts und
wobei der Verbundstoff einen durchschnittlichen Sekundärteilchendurchmesser von 6 µm oder mehr und weniger als 10 µm aufweist.

2. Das Abgasreinigungssystem (1) gemäß Anspruch 1, bei dem
das Edelmetall in der ersten Schicht (5) zumindest eine Art von Metall aus Pt und Pd beinhaltet.

3. Das Abgasreinigungssystem (1) gemäß Anspruch 1 oder 2, bei dem
das Edelmetall in der zweiten Schicht (6) zumindest eine Art von Metall aus Rh, Ir und Ru beinhaltet.

4. Das Abgasreinigungssystem (1) gemäß einem der Ansprüche 1 bis 3, bei dem
der Prozentsatz des Ceroxidgehalts in der ersten Schicht (5) 8 Gew.-% oder mehr und 40 Gew.-% oder weniger beträgt und höher ist als der Prozentsatz des Ceroxidgehalts in der zweiten Schicht (6).

5. Das Abgasreinigungssystem (1) gemäß einem der Ansprüche 1 bis 4, bei dem
der Prozentsatz des Ceroxidgehalts in der zweiten Schicht (6) weniger als 10 Gew.-% beträgt und niedriger ist als der Prozentsatz des Ceroxidgehalts in der ersten Schicht (5).

6. Das Abgasreinigungssystem (1) gemäß einem der Ansprüche 1 bis 5, bei dem
die erste Schicht (5) mit einer Dicke von 3 µm oder mehr und 50 µm oder weniger zwischen der zweiten Schicht (6) und dem rostfreien Stahlträger (2) so vorgesehen ist, dass sie in Kontakt mit der zweiten Schicht (6) und dem rostfreien Stahlträger (2) steht.

7. Das Abgasreinigungssystem (1) gemäß einem der Ansprüche 1 bis 6, bei dem
die zweite Schicht (6) mit einer Dicke von 3 µm oder mehr und 50 µm oder weniger auf der ersten Schicht (5) so vorgesehen ist, dass sie in Kontakt mit der ersten Schicht (5) steht, wobei die erste Schicht (5) auf dem rostfreien Stahlträger (2) so vorgesehen ist, dass sie in Kontakt mit dem rostfreien Stahlträger (2) steht.

8. Das Abgasreinigungssystem (1) gemäß einem der Ansprüche 1 bis 7, bei dem
eine Oberfläche der ersten Schicht (5), die in Kontakt mit der zweiten Schicht (6) steht, eine unebene Oberfläche mit einer Unebenheit ist und die zweite Schicht (6) derart gebildet ist, dass eine Komponente der zweiten Schicht (6) innerhalb einer Ausnehmung der unebenen Oberfläche der ersten Schicht (5) liegt.

9. Ein Grätsch-Typ-Fahrzeug (10) mit dem Abgasreinigungssystem (1) gemäß einem der Ansprüche 1 bis 8.

## Revendications

1. Système de purification de gaz d'échappement (1) d'un moteur à essence (11), le système de purification de gaz d'échappement (1) comprenant:
un support en acier inoxydable (2) réalisé en acier inoxydable;
une première couche (5) contenant du oxyde de cérium et au moins un type de métal noble sélectionné parmi le groupe constitué de Pt, Pd, Ir, Ru et Os; et
une deuxième couche (6) contenant au moins un type de métal noble sélectionné parmi le groupe constitué de Rh, Ir, Ru, Pt, Pd, Au, Ag et Os, la deuxième couche (6) présentant une teneur en oxyde de cérium inférieure à une teneur en oxyde de cérium dans la première couche (5) ou présentant une teneur en oxyde de cérium de 0% en poids,
la première couche (5) étant prévue entre la deuxième couche (6) et le support en acier inoxydable (2) de manière à être en contact avec la deuxième couche (6) et le support en acier inoxydable (2), la deuxième couche (6) étant prévue sur la première couche (5),
dans lequel, parmi la première couche (5) et la deuxième couche (6), au moins la première couche (5) contient un métal noble et un matériau composite dans lequel sont combinées de l'alumine et une solution solide de oxyde de cérium-zircone dopée d'un élément de terres rares,
dans lequel le matériau composite présente une partie d'alumine et une partie de oxyde de cérium-zircone dont le diamètre de particule primaire moyen est plus petit que le diamètre de particule primaire moyen de la partie d'alumine, et
dans lequel le matériau composite présente un diamètre de particule secondaire moyen de 6 µm ou plus et de moins de 10 µm.

2. Système de purification de gaz d'échappement (1) selon la revendication 1, dans lequel
le métal noble de la première couche (5) comporte au moins un type de métal parmi Pt et Pd.

3. Système de purification de gaz d'échappement (1) selon la revendication 1 ou 2, dans lequel
le métal noble dans la deuxième couche (6) comporte au moins un type de métal parmi Rh, Ir et Ru.

4. Système de purification de gaz d'échappement (1) selon l'une quelconque des revendications 1 à 3, dans lequel
le pourcentage de teneur en oxyde de cérium dans la première couche (5) est de 8% en poids ou plus et de 40% en poids ou moins, et est supérieur au pourcentage de teneur en oxyde de cérium dans la deuxième couche (6).

5. Système de purification de gaz d'échappement (1) selon l'une quelconque des revendications 1 à 4, dans lequel
le pourcentage de teneur en oxyde de cérium dans la deuxième couche (6) est inférieur à 10% en poids et est inférieur au pourcentage de teneur en oxyde de cérium dans la première couche (5).

6. Système de purification de gaz d'échappement (1) selon l'une quelconque des revendications 1 à 5, dans lequel
la première couche (5) présentant une épaisseur de 3 µm ou plus et de 50 µm ou moins est prévue entre la deuxième couche (6) et le support en acier inoxydable (2) de manière à être en contact avec la deuxième couche (6) et le support en acier inoxydable (2).

7. Système de purification de gaz d'échappement. (1) selon l'une quelconque des revendications 1 à 6, dans lequel
la deuxième couche (6) présentant une épaisseur de 3 µm ou plus et de 50 µm ou moins est prévue sur la première couche (5) de manière à être en contact avec la première couche (5), la première couche (5) étant prévue sur le support en acier inoxydable (2) de manière à être en contact avec le support en acier inoxydable (2).

8. Système de purification de gaz d'échappement (1) selon l'une quelconque des revendications 1 à 7, dans lequel
une surface de la première couche (5) qui est en contact avec la deuxième couche (6) est une surface irrégulière présentant une irrégularité, et la deuxième couche (6) est formée de sorte qu'un composant de la deuxième couche (6) se situe dans un évidement de la surface irrégulière de la première couche (5).

9. Véhicule à selle (10) comprenant le système d'épuration de gaz d'échappement (1) selon l'une quelconque des revendications 1 à 8.
